# EUROPÄISCHE PATENTANMELDUNG

(11) **EP 2 557 733 A1**
(43) Veröffentlichungstag der Anmeldung: **13.02.2013**
(21) Anmeldenummer: 12173741.5
(22) Anmeldetag: 27.06.2012
(51) Int. Cl.: H04L 12/28, H04L 12/24, H04L 12/46

(54) **Konfiguration eines Kommunikationsnetzwerks**

(30) Priorität: 09.08.2011 DE 102011080676
(71) Anmelder: SIEMENS AKTIENGESELLSCHAFT, 80333 München (DE)
(72) Erfinder: Gessner, Jürgen, 85661 Forstinning (DE); Hof, Hans-Joachim, Prof., 85057 Ingolstadt (DE); Houyou, Amine Mohamed, Dr., 81543 München (DE); Huth, Hans-Peter, 80638 München (DE)

(57) **Zusammenfassung**

Die Erfindung beschreibt ein Verfahren zum rechnergestützten Konfigurieren eines Kommunikationsnetzwerks (1) für den Zugriff eines externen Nutzerrechners (10). Das Kommunikationsnetzwerk (1) umfasst ein oder mehrere Endgeräte (30, 32, 34, 36), auf die von dem Nutzerrechner (10) über eine Kommunikationsverbindung, welche über ein oder mehrere Kopplungselemente (20, 22, 24) führt, unter der Bedingung zugegriffen werden kann, dass der Nutzerrechner (10), die Kopplungselemente (20, 22, 24) der Kommunikationsverbindung und die Endgeräte (30, 32, 34, 36) derart konfiguriert sind, dass diese einem gleichen logischen Teilnetz des Kommunikationsnetzwerks (1) zugeordnet sind. Eine Anfrage des Nutzerrechners (10) wird bezüglich eines Zugriffs auf zumindest eines der Endgeräte (30, 32, 34, 36) durch das Kommunikationsnetzwerk (1) verarbeitet. Basierend auf Parametern der Anfrage sowie von Verfügbarkeits- und/oder Ressourcenkriterien des Kommunikationsnetzwerks (1) wird eine dynamische Konfiguration der Kopplungselemente (20, 22, 24) durchgeführt, durch welche die für die Bildung des Kommunikationspfads erforderlichen Kopplungselemente (20, 22, 24) dem gleichen logischen Teilnetz zugeordnet werden.

## Beschreibung

Die Erfindung betrifft ein Verfahren zum rechnergestützten Konfigurieren eines Kommunikationsnetzwerks für den Zugriff eines externen Nutzerrechners. Ferner betrifft die Erfindung ein Kommunikationsnetzwerk.

Das Kommunikationsnetzwerk umfasst ein oder mehrere Endgeräte, auf die von dem Nutzerrechner über eine Kommunikationsverbindung, welche über ein oder mehrere Kopplungselemente führt, unter der Bedingung zugegriffen werden kann, dass der Nutzerrechner, die Kopplungselemente der Kommunikationsverbindung und die Endgeräte derart konfiguriert sind, dass diese einem gleichen logischen Teilnetz des Kommunikationsnetzwerks zugeordnet sind.

Ein derartiger Zugriff auf ein oder mehrere Endgeräte erfolgt bspw. bei der Wartung von Maschinen, wie Industrierobotern, im Rahmen einer entfernten Wartung ("Remote Maintenance"). Um diese Wartung von einem Rechner außerhalb der Domäne des Kommunikationsnetzwerks vornehmen zu können, ist es erforderlich, eine Kommunikationsverbindung von dem Rechner zu der oder den zu wartenden Maschinen bereitzustellen. Eine solche Kommunikationsverbindung wird in der Regel gesichert vom Standort des (Wartungs-)Rechners in das Kommunikationsnetzwerk der Maschine und dann direkt zu der zu wartenden Maschine geführt werden.

Die Kommunikationsverbindung zwischen dem Wartungsrechner und zu wartender Maschine wird - innerhalb des lokalen Netzes - häufig über ein virtuelles LAN (VLAN, Virtual Local Area Network) realisiert. Ein VLAN ist ein logisches Teilnetz innerhalb eines Switches oder eines gesamten physischen Kommunikationsnetzwerks. Es kann sich über einen oder mehrere Switches hinweg ausdehnen. Das VLAN trennt physische Kommunikationsnetzwerke in logische Teilnetze auf, indem es dafür sorgt, dass VLAN-fähige Switches Datenpakete oder Nachrichten eines VLANs nicht in ein anderes VLAN weiterleiten. Dennoch können mehrere logische Teilnetze an gemeinsamen Switches angeschlossen sein. Die Vermittlung des Datenverkehrs zwischen verschiedenen VLANs erfolgt mittels eines Routers. Moderne Switches stellen diese Funktion auch intern zur Verfügung, diese werden als Layer-3-Switches bezeichnet.

Die Erstellung eines VLANs erfolgt durch Konfiguration. Im Rahmen der Konfiguration wird festgelegt, welche Switches einem VLAN angehören und auf welche Weise bzw. über welche Verbindungen diese miteinander kommunizieren können bzw. dürfen. In der Regel erfolgt eine derartige Konfiguration einmalig. Diesem VLAN zugeordnete Komponenten können dann beliebig miteinander kommunizieren. Sind in einem Kommunikationsnetzwerk Maschinen unterschiedlicher Hersteller integriert, so kann es erforderlich sein für die Wartung einer jeweiligen Maschine unterschiedliche VLANs oder andere Sicherheitsmechanismen bereitstellen zu müssen, um zu verhindern, dass ein unberechtigter Zugriff auf die einzelnen Maschinen erfolgen kann. Dies erfordert einen hohen Konfigurations- und Administrationsaufwand in dem Kommunikationsnetzwerk.

Es ist daher Aufgabe der vorliegenden Erfindung, ein Verfahren zum rechnergestützten Konfigurieren eines Kommunikationsnetzwerks, eine Vorrichtung und ein Kommunikationsnetzwerk anzugeben, mit welchen ein gesicherter Zugriff auf Komponenten des Kommunikationsnetzwerks auf einfachere Art und Weise erfolgen kann.

Diese Aufgaben werden gelöst durch ein Verfahren gemäß den Merkmalen des Anspruches 1, eine Vorrichtung gemäß den Merkmalen des Patentanspruches 14 und ein Kommunikationsnetzwerk gemäß den Merkmalen des Patentanspruches 15. Vorteilhafte Ausgestaltungen ergeben sich aus den abhängigen Patentansprüchen.

Die Erfindung schafft ein Verfahren zum rechnergestützten Konfigurieren eines Kommunikationsnetzwerks für den Zugriff eines externen Nutzerrechners, wobei das Kommunikationsnetzwerk ein oder mehrere Endgeräte umfasst, auf die von dem Nutzerrechner über eine Kommunikationsverbindung, welche über ein oder mehrere Kopplungselemente führt, unter der Bedingungen zugegriffen werden kann, dass der Nutzerrechner, die Kopplungselemente der Kommunikationsverbindung und die Endgeräte derart konfiguriert sind, dass diese einem gleichen logischen Teilnetz des Kommunikationsnetzwerks zugeordnet sind.

Bei dem Verfahren wird eine Anfrage des Nutzerrechners bezüglich eines Zugriffs auf zumindest eines der Endgeräte durch das Kommunikationsnetzwerk verarbeitet. Basierend auf Parametern der Anfrage sowie von Verfügbarkeits- und/oder Ressourcenkriterien des Kommunikationsnetzwerks wird eine dynamische Konfiguration der Kopplungselemente durchgeführt, durch welche die für die Bildung des Kommunikationspfads erforderlichen Kopplungselemente dem gleichen logischen Teilnetz zugeordnet werden.

Die Erfindung schafft ferner eine Vorrichtung zum rechnergestützten Konfigurieren eines Kommunikationsnetzwerks für den Zugriff eines externen Nutzerrechners, wobei das Kommunikationsnetzwerk ein oder mehrere Endgeräte umfasst, auf die von dem Nutzerrechner über eine Kommunikationsverbindung, welche über ein oder mehrere Kopplungselemente führt, unter der Bedingung zugegriffen werden kann, dass der Nutzerrechner, die Kopplungselemente der Kommunikationsverbindung und die Endgeräte derart konfiguriert sind, dass diese einem gleichen logischen Teilnetz des Kommunikationsnetzwerks zugeordnet sind.

Die Vorrichtung umfasst ein erstes Mittel zur Verarbeitung einer Anfrage des Nutzerrechners bzgl. eines Zugriffs auf zumindest eines der Endgeräte durch das Kommunikationsnetzwerk. Die Vorrichtung umfasst ferner ein zweites Mittel, das dazu ausgebildet ist, basierend auf Parametern der Anfrage sowie von Verfügbarkeits- und/oder Ressourcenkriterien des Kommunikationsnetzwerks eine dynamische Konfiguration der Kopplungselemente durchzuführen, durch welche die für die Bildung der Kommunikationsverbindung erforderlichen Kopplungselemente im gleichen logischen Teilnetz zugeordnet werden.

Ferner umfasst die Erfindung ein Kommunikationsnetzwerk, das ein oder mehrere Endgeräte umfasst, auf die von dem Nutzerrechner über eine Kommunikationsverbindung, welche über ein oder mehrere Kopplungselemente führt, und der Bedingung zugegriffen werden kann, dass der Nutzerrechner, die Kopplungselemente der Kommunikationsverbindung und die Endgeräte derart konfiguriert sind, dass diese einem gleichen logischen Teilnetz des Kommunikationsnetzwerks zugeordnet sind. Das Kommunikationsnetzwerk weist erfindungsgemäß eine Vorrichtung der oben bezeichneten Art auf.

Die Erfindung ermöglicht eine dynamische Konfiguration eines logischen Teilnetzes des Konfigurationsnetzwerkes, welches bspw. zu Konfigurationszwecken eines oder mehrerer Endgeräte des Kommunikationsnetzwerks erstellt wird. Die Konfiguration des logischen Teilnetzes erfolgt dabei rechnergestützt, sodass die Konfiguration nicht lediglich initial bei der Erstellung des Kommunikationsnetzwerks zu erfolgen braucht. Stattdessen kann auf die Gegebenheiten eines jeweiligen Zugriffs des Nutzerrechners auf eines oder mehrere der Endgeräte Rücksicht genommen werden, durch den beispielsweise eine Konfiguration der Endgeräte durchgeführt werden soll. Der Nutzerrechner stellt dabei einen Rechner dar, der - sofern das logische Teilnetz nicht konfiguriert ist - kein Teilnehmer des Kommunikationsnetzwerks ist.

Durch die automatisierte Konfiguration des logischen Teilnetzes ergibt sich ein niedriger Wartungsaufwand, insbesondere ist keine regelmäßige Überprüfung des logischen Teilnetzes dahingehend erforderlich, ob dieses die notwendigen Anforderungen noch erfüllt. Im Gegensatz zu gegenwärtigen Kommunikationsnetzwerken muss eine Konfiguration des logischen Teilnetzes nicht vorab geplant "auf Vorrat" erfolgen. Stattdessen kann die Konfiguration zielgerichtet auf den jeweiligen Einsatzzweck vorgenommen sein. Dies erhöht nicht nur die Flexibilität, sondern verringert auch die benötigten Ressourcen für das logische Teilnetz entsprechend den jeweiligen Erfordernissen.

Diese Flexibilität wird dadurch ermöglicht, dass die dynamische Konfiguration des logischen Teilnetzes erst auf Anfrage des Nutzerrechners erfolgt, wobei für die Konfiguration Verfügbarkeit- und/oder Ressourcenkriterien des Kommunikationsnetzwerks berücksichtigt werden. Dies bedeutet, der für den Zeitpunkt der Anfrage gegenwärtige und/oder zukünftige Zustand des Kommunikationsnetzwerks wird bei der Erstellung des logischen Teilnetzes berücksichtigt. Damit kann eine Konfiguration derart erfolgen, dass die in der Anfrage enthaltenen Anforderungen erfüllt werden. Darüber hinaus kann sichergestellt werden, dass die in der Anfrage enthaltenen Anforderungen nicht überschritten werden. Ein weiterer Vorteil besteht darin, dass Ressourcen wie z.B. Bandbreite nur bei Bedarf belegt werden und dadurch weniger "Overprovisioning" benötigt wird und somit eine bessere Auslastungsrate erzielbar ist.

Die dynamische Konfiguration ermöglicht neue Anwendungsfälle, in denen logische Teilnetze "on-demand" mit geringem Konfigurationsaufwand angelegt werden können. Hierdurch kann der Eigentümer des Kommunikationsnetzwerks einem Dienstleister, welcher den Nutzerrechner nutzt, sehr viel einfacher Zugang zu dem Kommunikationsnetzwerk gewähren. In entsprechender Weise kann ein gewährter Zugang auch wieder entzogen werden.

Die Konfiguration logischer Teilnetze kann auch nachträglich zielgerichtet zu bestimmten Endgeräten vorgenommen werden. Auch hier durch wird nicht nur die Flexibilität erhöht, sondern die zur Verfügung stehenden Ressourcen werden besser ausgenutzt.

In einer weiteren Ausgestaltung wird das logische Teilnetz nur für einen gewährten Zeitraum konfiguriert und die Konfiguration wird nach Ablauf des gewährten Zeitraums gelöscht, wobei der gewährte Zeitraum einem angefragten Zeitraum entsprechen oder innerhalb des angefragten Zeitraums liegen oder sich mit dem angefragten Zeitraum überschneiden kann. Die dynamische Konfiguration ermöglicht damit die Einbeziehung eines Zeitkriteriums, sodass das logische Teilnetzwerk nur für den tatsächlich benötigten Zeitraum zur Verfügung gestellt wird. Hierdurch können außerhalb des Zeitraums die Ressourcen des Kommunikationsnetzwerks für andere Zwecke genutzt werden.

Gemäß einer weiteren zweckmäßigen Ausgestaltung wird das logische Teilnetz als virtuelles LAN (VLAN, Virtual Local Area Network) in dem Ethernet-basierten Kommunikationsnetzwerk konfiguriert. Eine alternative Möglichkeit, logische Teilnetze in einem Kommunikationsnetzwerk vorzusehen, wäre VPN (Virtual Private Network) oder MPLS (Multi Protocol Label Switching).

In einer weiteren Ausgestaltung umfasst die Anfrage als Parameter erste Informationen über eine Anforderung an die Kommunikationsverbindung für den Zugriff auf das zumindest eine Endgerät. Derartige Anforderungen können bspw. eine für den Zugriff benötigte Bandbreite, eine maximale Verzögerung (delay) oder eine bestimmte Dienstgüte der Kommunikationsverbindung (Quality of Service, QoS) sein. Es versteht sich, dass die ersten Informationen auch weitere, die Kommunikationsverbindung beschreibende Parameter umfassen können. Dabei können diese Parameter in der Anfrage in einer beliebigen Kombination oder Unterkombination an das Kommunikationsnetzwerk übertragen werden.

Gemäß einer weiteren Ausgestaltung umfasst die Anfrage als Parameter zweite Informationen über eine Art und/oder den Zweck des Zugriffs. Derartige zweite Informationen könnten bspw. eine geplante Wartung, eine Aktualisierung der Software des Endgeräts (Update), eine bloße Überprüfung der Konfiguration des Endgeräts, das Auslesen von Daten eines Speichers des Endgeräts, usw. sein. Die zweiten Informationen können bspw. dazu verwendet werden, einen optimalen Zeitraum zu ermitteln, indem die Anforderungen der Anfrage und die Gegebenheiten des Kommunikationsnetzwerks optimal in Übereinstimmung gebracht werden. Die Parameter der zweiten Informationen können beispielsweise durch den Betreiber des Kommunikationsnetzwerks zur Auswahl vorgegeben werden.

Gemäß einer weiteren Ausgestaltung umfasst die Anfrage als Parameter dritte Informationen über Ressourcen, die für den Zugriff auf das zumindest eine Endgerät benötigt werden. Ressourcen umfassen bspw. für einen Zugriff benötigte Geräte und/oder Komponenten, die sich in dem logischen Teilnetz befinden sollen. Beispielsweise könnte für den Zugriff auf eine Maschine für eine durchzuführende Wartung auch ein Zugriff auf eine Datenbank benötigt werden, welche in einem separaten Endgerät realisiert ist.

Gemäß einer weiteren Ausgestaltung umfasst die Anfrage als Parameter vierte Informationen über ein Zeitkriterium des Zugriffs auf das zumindest eine Endgerät. Hier werden durch den Nutzerrechner Informationen angegeben, in welchem Zeitraum ein Zugriff auf das oder die Endgeräte geplant ist. Diese in der Anfrage enthaltenen Zeitinformationen können bspw. durch einen Benutzer oder Bediener des Nutzerrechners vorgegeben sein und einen "Wunschzeitraum" des Zugriffs darstellen. Derartige Informationen können durch das Konfigurationsnetzwerk bei der Erstellung des logischen Teilnetzes berücksichtigt werden.

Gemäß einer weiteren Ausgestaltung werden in der Anfrage als Parameter enthaltene Authentisierungsinformationen des Nutzerrechners oder eines Nutzers des Nutzerrechners in dem Schritt des Verarbeitens der Anfrage in einem Authentisierungsprozess zwischen dem Nutzerrechner und dem Kommunikationsnetzwerk verarbeitet. Hierdurch kann sichergestellt werden, dass ein angefragter Zugriff auf das oder die Endgeräte lediglich durch autorisierte Nutzerrechner bzw. Nutzer erfolgt. Darüber hinaus kann festgestellt werden, ob der Nutzerrechner benötigte Rechte aufweist, welche für den Zugriff auf das oder die Endgeräte benötigt werden.

Gemäß einer weiteren zweckmäßigen Ausgestaltung umfasst der Schritt des Verarbeitens der Anfrage eine Ermittlung von Rechten und/oder Richtlinien des Nutzerrechners bzgl. des Zugriffs auf das zumindest eine Endgerät und optional benötigte weitere Komponenten.

In einer weiteren zweckmäßigen Ausgestaltung werden aus den Parametern der Anfrage, sowie optional den ermittelten Rechten und/oder Richtlinien, und den Verfügbarkeits- und/oder Ressourcenkriterien der für den Zugriff auf das zumindest eine Endgerät benötigten Kopplungselemente Konfigurationsdaten für die Konfiguration der Kopplungselemente ermittelt. Anhand dieser Konfigurationsdaten können dann die Kopplungselemente zur Bereitstellung des logischen Teilnetzes konfiguriert werden. Die Ermittlung der Konfigurationsdaten sowie die Durchführung der Konfiguration der Kopplungselemente erfolgt dabei rechnergestützt und vollautomatisiert.

Gemäß einer weiteren Ausgestaltung werden als Verfügbarkeits-und/oder Ressourcenkriterien eine oder mehrere der folgenden Kriterien berücksichtigt: eine vorhandene und/oder tatsächlich nutzbare und benötigte Bandbreite der Kommunikationsverbindung; die zeitliche Verfügbarkeit der benötigten Kopplungselemente und/oder des zumindest einen Endgeräts. Die Überprüfung der Verfügbarkeits- und/oder Ressourcenkriterien dient dazu, den Zugriff auf das oder die Endgeräte durch den Nutzerrechner derart zu ermöglichen, dass dessen benötigte oder erwünschte Anforderungen einerseits erfüllt werden, andererseits aber nicht überschritten werden können. Darüber hinaus kann hiermit Sorge getragen werden, dass andere in dem Kommunikationsnetzwerk ablaufende Aktivitäten durch den Zugriff des Nutzerrechners auf das oder die angefragten Endgeräte nicht beeinträchtigt werden.

Gemäß einer weiteren Ausgestaltung werden für die Konfiguration des logischen Teilnetzes ein oder mehrere vordefinierte und durch Benutzerrechner selektierbare Profile bereitgestellt, wobei ein Profil zumindest einen Teil der Konfigurationsdaten für die Konfiguration der Kopplungselemente für den Zugriff zumindest eines Endgeräts umfasst. Insbesondere können die die Ressourcen betreffende Konfigurationsdaten und/oder gewünschte Zeiten vorgegeben sein bzw. durch Benutzerrechner auswählbar sein. Diese Vorgehensweise ist insbesondere dann von Vorteil, wenn wiederkehrende Zugriffe auf das oder die Endgeräte durch einen bestimmten Nutzerrechner erfolgen. Dies könnten bspw. Wartungsaufgaben in einem Kommunikationsnetzwerk sein.

In einer weiteren Ausgestaltung wird in dem Schritt des Verarbeitens der Anfrage ein Zustand des Kommunikationsnetzwerks, insbesondere der Kopplungselemente und/oder des zumindest einen angefragten Endgeräts, in Bezug auf Verfügbarkeit und Ressourcen für einen angefragten Zeitraum ermittelt, wobei der Zugriff auf das zumindest eine Endgerät basierend auf dem Zustand in der Zukunft gewährt wird. Wie bereits beschrieben soll hierdurch sichergestellt werden, dass die Anforderungen der Anfrage und weitere in dem Kommunikationsnetzwerk ablaufende Aktivitäten optimal aufeinander abgestimmt werden, sodass keine nachteilige, wechselweise Beeinflussung erfolgt.

Die erfindungsgemäße Vorrichtung kann weitere Mittel zur Durchführung des erfindungsgemäßen Verfahrens umfassen.

Die Erfindung wird nachfolgend näher anhand eines Ausführungsbeispiels in der Zeichnung erläutert. Die einzige Figur zeigt eine schematische Darstellung eines erfindungsgemäßen Kommunikationsnetzwerks.

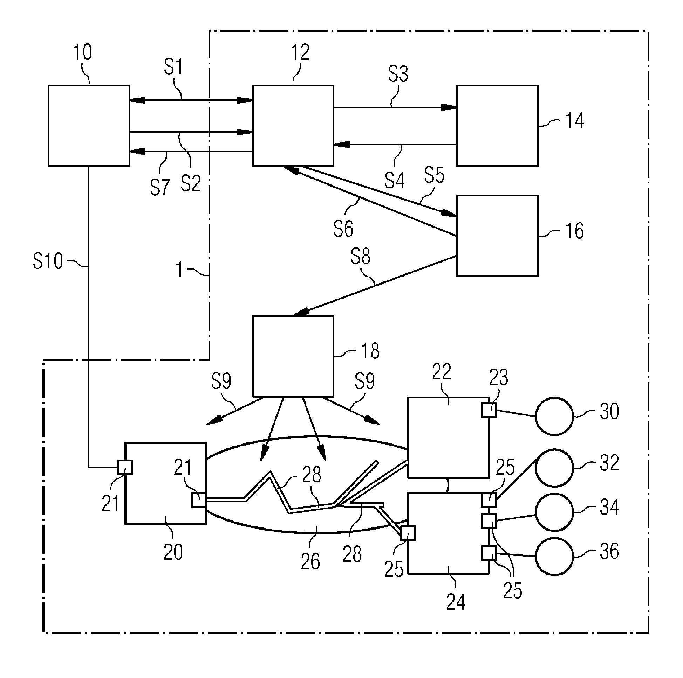

Fig. 1 zeigt in schematischer Darstellung ein Kommunikationsnetzwerk 1. Das Kommunikationsnetzwerk 1 umfasst einen Schnittstellenrechner 12, einen Datenbankrechner 14, einen Planungsrechner 16, einen Konfigurationsrechner 18, Kopplungselemente 20, 22, 24 zur Bildung eines logischen Teilnetzes 26 und an die Kopplungselemente 22, 24 angeschlossene Endgeräte 30, 32, 34, 36.

Der Schnittstellenrechner 12 ermöglicht es, einem außerhalb des Kommunikationsnetzwerks 1 befindlichen Nutzerrechner 10 mit dem Kommunikationsnetzwerk 1 zu kommunizieren, solange dem Nutzerrechner 10 noch keine Zugriffsrechte auf das Kommunikationsnetzwerk 1 eingeräumt sind. Die Aufgabe des Schnittstellenrechners 12 besteht darin, Anfragen des Nutzerrechners 10 bezüglich eines Zugriffs auf eines oder mehrere der Endgeräte 30, 32, 34, 36 entgegen zu nehmen, zu verarbeiten und/oder an entsprechende Rechner des Kommunikationsnetzwerks 1 zur Verarbeitung weiterzuleiten und im Anschluss eine Antwort an den Nutzerrechner 10 zu übertragen.

Mit einer Anfrage des Nutzerrechners 10 bezweckt dieser den Zugriff auf eines oder mehrere der Endgeräte 30, 32, 34, 36. Bei den Endgeräten 30, 32, 34, 36 handelt es sich bspw. um Maschinen, Roboter, Datenbanken u.dgl. Der Nutzerrechner bezweckt eine Kommunikation zu mindestens einem der Endgeräte 30, 32, 34, 36, um bspw. eine Wartungsaufgabe, eine Aktualisierung u.dgl. zu übernehmen. Hierzu muss dem Nutzerrechner 10 eine entsprechende Kommunikationsverbindung zur Verfügung gestellt werden, so dass ein Zugriff auf die erwünschten und/oder erforderlichen Endgeräte 30, 32, 34, 36 ermöglicht wird, der Nutzerrechner 10 jedoch keinen Zugang zu anderen Bestandteilen des Kommunikationsnetzwerks erhält.

In der Kommunikationsverbindung liegende Kopplungselemente (in diesem Beispiel 20 sowie 22 und/oder 24, abhängig von den benötigten Endgeräten) müssen hierzu zu einem logischen Teilnetz 26 verschaltet werden. In diesem Fall kann der Nutzerrechner 10 über das Kopplungselement 20, optional in dem logischen Teilnetz 26 vorhandene weitere Kopplungselemente, welche über Kommunikationsverbindungen 28 miteinander verbunden sind, und das oder die Kopplungselemente 22, 24 auf das oder die gewünschten Endgeräte 30, 32, 34, 36 zugreifen.

Im vorliegenden Ausführungsbeispiel sind lediglich diejenigen Kopplungselemente 20, 22, 24 und Kommunikationsverbindungen 28 dargestellt, welche im Zuge des erfindungsgemäßen Verfahrens zu einem logischen Teilnetz 26 gehörig sind. Diese das Teilnetz ausbildenden Komponenten stellen dabei lediglich eine Untermenge einer größeren Anzahl an Kopplungselementen und Kommunikationsverbindungen dar.

Das logische Teilnetz 26 ist im vorliegenden Ausführungsbeispiel als virtuelles LAN (Virtual Local Area Network, VLAN) ausgestaltet. Prinzipiell könnte das logische Teilnetz 26 auch durch andere Technologien, sofern sich diese in erfindungsgemäßer Weise dynamisch konfigurieren lassen, bereitgestellt werden. Beispielsweise könnte dies mittels VPN oder MPLS erfolgen.

Das VLAN trennt das Kommunikationsnetzwerk 1 in unterschiedliche logische Teilnetze auf, indem es dafür sorgt, dass die VLAN-fähigen Kopplungselemente 20, 22, 24 Datenpakete eines VLANs nicht in ein anderes VLAN weiterleiten und das, obwohl die Teilnetze an gemeinsame Kopplungselemente angeschlossen sein können. Im Vergleich zu einer physischen Zuordnung zu verschiedenen Subnetzen weisen VLANs den Vorteil auf, dass ein Wechsel von einem VLAN in ein anderes VLAN nur am Kopplungselement 20, 22, 24 geschehen kann, jedoch keine physische Verbindung geändert werden muss. Hierzu müssen die Kopplungselemente 20, 22, 24 in entsprechender Weise konfiguriert werden.

Prinzipiell sind von VLANs verschiedene Arten der Konfiguration bekannt. Beispielsweise existieren portbasierte VLANs, bei denen ein konfigurierbares Kopplungselement portweise in mehrere logische Switches segmentiert wird. Ein Port gehört dann immer nur zu einem VLAN oder er stellt einen sog. Trunk-Port dar.

Alternativ sind sog. tagged VLANs bekannt. Bei tagged VLANs handelt es sich um logische Teilnetze, die Netzwerkpakete verwenden, welche eine zusätzliche VLAN-Markierung tragen. Durch die Tags werden VLAN-spezifische Informationen zum Datenpaket hinzugefügt. Bei tagged VLANs braucht daher keine statische Zuordnung einzelner Ports zu einem VLAN erfolgen, wodurch eine größere Flexibilität besteht. Die Zugehörigkeit eines Frames wird bei einem tagged VLAN anhand bestimmter Inhalte eines Datenpaketes getroffen. Diese werden von daher als dynamische VLANs bezeichnet, wobei sich die Dynamik lediglich auf die automatisierte Zuweisung eines Datenpakets zu einem bestimmten VLAN erstreckt. Tatsächlich müssen die VLANs im Stand der Technik zunächst statisch vorkonfiguriert sein.

Weiterhin ist die Norm IEEE 802.1q eine durch das IEEE genormte Priorisierungs- und VLAN-Technologie, welche paketbasierte tagged VLANs beschreibt. In diesem Standard ist dabei der genaue Aufbau der speziellen VLAN-Markierung beschrieben.

In dem erfindungsgemäßen Verfahren kann jede der genannten VLAN-Technologien zum Einsatz kommen.

Basierend auf einer Anfrage des Nutzerrechners 10 bzgl. eines Zugriffs auf zumindest eines der Endgeräte 30, 32, 34, 36 und von Verfügbarkeits- und/oder Ressourcenkriterien des Kommunikationsnetzwerks wird eine dynamische Konfiguration der Kopplungselemente 20, 22, 24 derart durchgeführt, dass bei Vorliegen bestimmter Voraussetzungen die für die Bildung der Kommunikationsverbindung erforderlichen Kopplungselemente dem gleichen logischen Teilnetz zugeordnet werden. Dies erfolgt mit Hilfe der bereits erwähnten Datenbankrechner 14, Planungsrechner 16 und Konfigurationsrechner 18, deren Funktionalität nachfolgend beschrieben wird.

Der Planungsrechner 16 verwaltet sämtliche geplanten und bereits konfigurierten logischen Teilnetze 26 des Kommunikationsnetzwerks 1. Der Planungsrechner 16 nimmt die Genehmigung eines angefragten Zugriffs vor. Diese Genehmigung basiert auf seinem Wissen über den Zustand des Kommunikationsnetzwerks 1 in der Zukunft im Hinblick auf Verfügbarkeit und Ressourcen. Dieses umfasst bspw. Informationen darüber, welche Benutzer bspw. bereits Wartungen oder Aktualisierungen an den einzelnen Endgeräten 30, 32, 34, 36 durchführen. In den Zustand des Kommunikationsnetzwerks 1 in der Zukunft können auch Informationen aus einer MES (Manufacturing Execution System) einfließen, soweit daraus Vorhersagen für den Zustand des Kommunikationsnetzwerks 1 getroffen werden können. Der Planungsrechner ist auf Basis dieser Informationen für das Einrichten und Löschen der Konfigurationen der logischen Teilnetze verantwortlich. Zusätzlich kann er auch einen Startzeitpunkt für ein logisches Teilnetz vorgeben, sowie ein Verfallsdatum des logischen Teilnetzes, sodass ein entsprechend konfiguriertes Kopplungselement das logische Teilnetz nach Ablauf des Verfallsdatums löscht.

Der Planungsrechner 16 kommuniziert mit dem Schnittstellenrechner 12 sowie dem Konfigurationsrechner 18. Über den Schnittstellenrechner 12 erhält der Planungsrechner 16 im Ausführungsbeispiel Zugang zu Richtlinien und Berechtigungen des Nutzerrechners, welche durch den Datenbankrechner 14 verwaltet werden. Alternativ zu dem dargestellten Ausführungsbeispiel könnte auch eine direkte Kommunikation zwischen dem Planungsrechner 16 und dem Datenbankrechner 14 bzw. der mit diesem verbundenen oder in dieser integrierten Datenbank vorgesehen sein.

Der Konfigurationsrechner 18 führt dynamisch die Konfiguration von VLANs durch, indem er die für ein jeweiliges VLAN benötigten Kopplungselemente 20, 22, 24 entsprechend konfiguriert. Die Konfiguration kann, wie oben beschrieben, erfolgen. Bei den Kopplungselementen 20, 22, 24 kann es sich um Switches, optional mit Routing-Funktionalität (Layer-3-Switch) für die Verbindung unterschiedlicher logischer Teilnetze, handeln. Die Konfiguration der Kopplungselemente 20, 22, 24 erfolgt beispielsweise derart, dass diese das logische Teilnetz durch den vom Planungsrechner 16 ermittelten Zeitpunkt ein- bzw. ausschalten.

Um dem Nutzerrechner 10 einen Zugriff auf das oder die Endgeräte 30, 32, 34, 36 zu ermöglichen, erfolgt - wie erläutert - eine dynamische Konfiguration ausgewählter Kopplungselemente, um den Nutzerrechner, das oder die angefragten Endgeräte und die in einer betreffenden Kommunikationsverbindung liegenden Kopplungselemente dem gleichen logischen Teilnetz zuzuordnen. Der Ablauf ist wie folgt:

Der Nutzerrechner (Synonym verwendet für einen Nutzer des Benutzerrechners 10) beantragt einen Zugang zu dem Kommunikationsnetzwerk 1 bei dem Schnittstellenrechner durch Übermittlung einer Anfrage (S1). Die Anfrage enthält Informationen bzgl. der benötigten Bandbreite, einer Dienstgüte (QoS), Anforderungen bzgl. der Delay, dem Zweck des Zugriffs usw. Allgemein können in einer Anfrage anwendungsspezifische Informationen für den Zugriff auf das oder die Endgeräte enthalten sein. Ferner übermittelt der Nutzerrechner 10 in seiner Anfrage die für den Zugriff auf das oder die Endgeräte 30, 32, 34, 36 benötigten Geräte und/oder Komponenten, die sich in dem angefragten logischen Teilnetz befinden sollen. Beispielsweise kann dies eine für die Wartung eines Roboters erforderliche Datenbank mit Konfigurationsdaten des Roboters sein. Optional können auch Informationen bzgl. des Zeitpunkts und der gewünschten Zeitdauer des Zugriffs enthalten sein. Die Anfrage kann optional auch Informationen über ein gewünschtes logisches Teilnetz enthalten. Beispielsweise kann dies in der Form eines dem logischen Teilnetz zugeordneten Kennzeichners erfolgen.

Zur Bearbeitung der Anfrage durch den Schnittstellenrechner 12 wird ein Authentifizierungs- und Autorisierungsprozess vorgenommen. Hierzu ermittelt der Schnittstellenrechner 12 mithilfe des Datenbankrechners 14, ob notwendige Berechtigungen vorliegen, um das logische Teilnetz für den Zugriff des Nutzerrechners auf das oder die Endgeräte zu erstellen (S3, S4). Hierzu findet eine entsprechende Kommunikation zwischen dem Schnittstellenrechner 12 und dem Datenbankrechner 14 statt. In Schritt S4 übermittelt der Datenbankrechner 14 eine Nachricht an den Schnittstellenrechner 12 mit einer positiven oder negativen Information über die Berechtigung des angefragten Zugriffs.

Im positiven Fall ermittelt der Planungsrechner 16 auf Anforderung des Schnittstellenrechners (Schritt S5), ob der von dem Nutzerrechner 10 erwünschte Zugriff mit den in der Anfrage enthaltenen Nebenbedingungen möglich ist. Darüber hinaus wird durch den Planungsrechner 16 ermittelt, zu welchem Zeitpunkt der Zugriff des Nutzungsrechners möglich ist. Dieser kann bspw. davon abhängen, ob die Endgeräte zu dem angefragten Zeitpunkt sich in einem Produktivbetrieb befinden (allgemein: zur Verfügung stehen oder nicht zur Verfügung stehen). Der Planungsrechner 16 ermittelt ferner, ob die in der Anfrage enthaltenen Informationen bzgl. der Kommunikationsverbindung zu dem angefragten Zeitpunkt zur Verfügung stehen. Beispielsweise kann die Bandbreite beeinflusst sein von anderen, in dem Kommunikationsnetzwerk ablaufenden Vorgängen, oder dem Betrieb der Endgeräte, bspw. aufgrund einer Kommunikation untereinander. Entsprechende Planungsdaten werden in Schritt S6 an den Schnittstellenrechner 12 übertragen.

Als Resultat des Authentifizierungs- und Autorisierungsvorganges sowie der Verarbeitung der in der Anfrage enthaltenen Informationen werden dem Nutzerrechner 10 bei Erfolg des Authentifizierungsvorganges Zugangsinformationen zu dem logischen Teilnetz 26 sowie der Zeitpunkt der zur Verfügungstellung des logischen Teilnetzes mitgeteilt. Ist der Authentifizierungsvorgang nicht erfolgreich, so wird dies dem Nutzerrechner 10 ebenfalls mitgeteilt, wobei kein logisches Teilnetz konfiguriert wird (Schritt S7). Die Antwort kann auch den Zeitpunkt der Beendigung des logischen Teilnetzes umfassen.

Gleichzeitig mit der Antwort an den Nutzerrechner 10 überträgt der Planungsrechner 16 in Schritt S8 entsprechende Konfigurationsdaten, die dieser aus den Informationen der Anfrage und den Verfügbarkeits- und/oder Ressourcenkriterien ermittelt hat, an den Konfigurationsrechner 18. Der Konfigurationsrechner 18 konfiguriert die für das logische Teilnetz benötigten Kopplungselemente, hier zumindest das erste Kopplungselement 20 und die letzten Kopplungselemente 22, 24, welche mit den Endgeräten 30, 32, 34, 36 verbunden sind. Die Schaltung des logischen Teilnetzes wird erst unmittelbar vor dem von dem Planungsserver vorgegebenen Zeitpunkt vorgenommen. Erst dann kann der Nutzungsrechner über das logische Teilnetz 26 auf das oder die Endgeräte 30, 32, 34, 36 zugreifen (S10). Optional kann auch hierbei in der Kommunikationsverbindung zwischen dem Nutzerrechner 10 und dem Kopplungselement 20 eine Firewall (nicht dargestellt) vorgesehen sein.

Das erfindungsgemäße Vorgehen weist eine Reihe von Vorteilen auf:

Um einem Nutzerrechner einen temporären Zugang zu einem Kommunikationsnetzwerk, und im speziellen zu ausgewählten Komponenten des Kommunikationsnetzwerks zu ermöglichen, ist ein lediglich niedriger Administrationsaufwand erforderlich. Insbesondere muss keine regelmäßige Überprüfung von Berechtigungen erfolgen.

Das vorgeschlagene Vorgehen reduziert fest vor-geplante Konfigurationszustände durch bei Bedarf (on-demand) durchgeführte Konfigurationen. Im Gegensatz zu heutigen Kommunikationsnetzwerken brauchen Konfigurationen logischer Teilnetze nicht "auf Vorrat" erfolgen. Hierdurch bedingt können nicht mehr benötigte Ressourcen auf einfache Weise wieder freigegeben werden.

In die Konfiguration logischer Teilnetze können Planungsinformationen über den Zustand und die Ressourcen der Komponenten des Kommunikationsnetzwerks einfließen.

Aufgrund eines geringeren Overprovisioning ergibt sich eine bessere Auslastungsrate.

Die dynamische Konfiguration ermöglicht Anwendungsfälle, in denen on-demand Teilnetze mit wenig Konfigurationsaufwand angelegt werden können. Hierdurch kann ein Eigentümer des Kommunikationsnetzwerks Dritten sehr viel einfacher Zugang zu dem Kommunikationsnetzwerk gewähren und diesen auch wieder entziehen.

Logische Teilnetze können einfach auch nach der Installation des Konfigurationsnetzwerks zielgerichtet an bestimmten Komponenten eingerichtet werden. Insbesondere ist die Kommunikation mit ausgewählten Geräten innerhalb des Kommunikationsnetzwerks möglich, ohne dem Dritten Zugang zu anderen, nicht erwünschten Komponenten zu geben.

In Anwendungen, welche mit Broadcast-Nachrichten arbeiten, können einfach temporäre Broadcast-Domänen über die Konfiguration logischer Teilnetze generiert werden.

In Anwendungsfällen, in denen Komponenten des Kommunikationsnetzwerks eine Software-Aktualisierung (Software-Patch) erfordern, die Aktualisierung jedoch nur durchgeführt werden kann, wenn die betreffenden Komponenten nicht produktiv sind, können entsprechende, temporär nicht benötigte Komponenten dynamisch zu einem logischen Teilnetz konfiguriert werden, um die Software-Aktualisierung durchzuführen. Nach der Aktualisierung können die Komponenten dynamisch in das logische Teilnetz konfiguriert werden, welches die Geräte bspw. zu einer Testumgebung zusammenfasst. In dieser können Tests durchgeführt werden, ohne das Produktionsnetz zu stören. Das vorgeschlagene Vorgehen ermöglicht damit den Verzicht auf separate Testnetze.

## Patentansprüche

1. Verfahren zum rechnergestützten Konfigurieren eines Kommunikationsnetzwerks (1) für den Zugriff eines externen Nutzerrechners (10), wobei das Kommunikationsnetzwerk (1) ein oder mehrere Endgeräte (30, 32, 34, 36) umfasst, auf die von dem Nutzerrechner (10) über eine Kommunikationsverbindung, welche über ein oder mehrere Kopplungselemente (20, 22, 24) führt, unter der Bedingung zugegriffen werden kann, dass der Nutzerrechner (10), die Kopplungselemente (20, 22, 24) der Kommunikationsverbindung und die Endgeräte (30, 32, 34, 36) derart konfiguriert sind, dass diese einem gleichen logischen Teilnetz des Kommunikationsnetzwerks (1) zugeordnet sind, bei dem
- eine Anfrage des Nutzerrechners (10) bezüglich eines Zugriffs auf zumindest eines der Endgeräte (30, 32, 34, 36) durch das Kommunikationsnetzwerk (1) verarbeitet wird;
- basierend auf Parametern der Anfrage sowie von Verfügbarkeits- und/oder Ressourcenkriterien des Kommunikationsnetzwerks (1) eine dynamische Konfiguration der Kopplungselemente (20, 22, 24) durchgeführt wird, durch welche die für die Bildung der Kommunikationsverbindung erforderlichen Kopplungselemente (20, 22, 24) dem gleichen logischen Teilnetz zugeordnet werden.

2. Verfahren nach Anspruch 1, bei dem das logische Teilnetz nur für einen gewährten Zeitraum konfiguriert wird und die Konfiguration nach Ablauf des gewährten Zeitraums gelöscht wird, wobei der gewährte Zeitraum einem angefragten Zeitraum entsprechen oder innerhalb des angefragten Zeitraums liegen oder sich mit dem angefragten Zeitraum überschneiden kann.

3. Verfahren nach Anspruch 1 oder 2, bei dem das logische Teilnetz als virtuelles LAN (VLAN) in dem Ethernet-basierten Kommunikationsnetzwerk (1) konfiguriert wird.

4. Verfahren nach einem der vorhergehenden Ansprüche, bei dem die Anfrage als Parameter erste Informationen über eine Anforderung an die Kommunikationsverbindung für den Zugriff auf das zumindest eine Endgerät umfasst.

5. Verfahren nach einem der vorhergehenden Ansprüche, bei dem die Anfrage als Parameter zweite Informationen über eine Art und/oder den Zweck des Zugriffs umfasst.

6. Verfahren nach einem der vorhergehenden Ansprüche, bei dem die Anfrage als Parameter dritte Informationen über Ressourcen umfasst, die für den Zugriff auf das zumindest eine Endgerät (30, 32, 34, 36) benötigt werden.

7. Verfahren nach einem der vorhergehenden Ansprüche, bei dem die Anfrage als Parameter vierte Informationen über ein Zeitkriterium des Zugriffs auf das zumindest eine Endgerät (20, 22, 24) umfasst.

8. Verfahren nach einem der vorhergehenden Ansprüche, bei dem in der Anfrage als Parameter enthaltene Authentisierungsinformationen des Nutzerrechners (10) oder eines Nutzers des Nutzerrechners (10) in dem Schritt des Verarbeitens der Anfrage in einem Authentisierungsprozess zwischen dem Nutzerrechner (10) und dem Kommunikationsnetzwerk (1) verarbeitet werden.

9. Verfahren nach einem der vorhergehenden Ansprüche, bei dem der Schritt des Verarbeitens der Anfrage eine Ermittlung von Rechten und/oder Richtlinien des Nutzerrechners (10) bezüglich des Zugriffs auf das zumindest eine Endgerät (30, 32, 34, 36) umfasst.

10. Verfahren nach einem der vorhergehenden Ansprüche, bei dem aus den Parametern der Anfrage, sowie optional den ermittelten Rechten und/oder Richtlinien, und den Verfügbarkeits-und/oder Ressourcenkriterien der für den Zugriff auf das zumindest eine Endgerät (30, 32, 34, 36) benötigten Kopplungselemente (20, 22, 24) Konfigurationsdaten für die Konfiguration der Kopplungselemente (20, 22, 24) ermittelt werden.

11. Verfahren nach einem der vorhergehenden Ansprüche, bei dem als Verfügbarkeits- und/oder Ressourcenkriterien eine oder mehrere der folgenden Kriterien berücksichtigt werden:
- eine vorhandene und/oder tatsächlich nutzbare und benötigte Bandbreite der Kommunikationsverbindung;
- die zeitliche Verfügbarkeit der benötigten Kopplungselemente (20, 22, 24) und/oder des zumindest einen Endgeräts (30, 32, 34, 36).

12. Verfahren nach einem der vorhergehenden Ansprüche, bei dem für die Konfiguration des logischen Teilnetzes ein oder mehrere vordefinierte und durch den Nutzerrechner (10) selektierbare Profile bereitgestellt werden, wobei ein Profil zumindest einen Teil der Konfigurationsdaten für die Konfiguration der Kopplungselemente (20, 22, 24) für den Zugriff zumindest eines Endgeräts (30, 32, 34, 36) umfasst.

13. Verfahren nach einem der vorhergehenden Ansprüche, bei dem in dem Schritt des Verarbeitens der Anfrage ein Zustand des Kommunikationsnetzwerks (1), insbesondere der Kopplungselemente (20, 22, 24) und/oder des zumindest einen angefragten Endgeräts (30, 32, 34, 36), in Bezug auf Verfügbarkeit und Ressourcen für einen angefragten Zeitraum ermittelt wird, wobei der Zugriff auf das zumindest eine Endgerät (30, 32, 34, 36) basierend auf dem Zustand in der Zukunft gewährt wird.

14. Vorrichtung zum rechnergestützten Konfigurieren eines Kommunikationsnetzwerks (1) für den Zugriff eines externen Nutzerrechners (10), wobei das Kommunikationsnetzwerk (1) ein oder mehrere Endgeräte (30, 32, 34, 36) umfasst, auf die von dem Nutzerrechner (10) über eine Kommunikationsverbindung, welche über ein oder mehrere Kopplungselemente (20, 22, 24) führt, unter der Bedingung zugegriffen werden kann, dass der Nutzerrechner (10), die Kopplungselemente (20, 22, 24) der Kommunikationsverbindung und die Endgeräte (30, 32, 34, 36) derart konfiguriert sind, dass diese einem gleichen logischen Teilnetz des Kommunikationsnetzwerks (1) zugeordnet sind, umfassend:
- ein erstes Mittel (12, 14) zur Verarbeitung einer Anfrage des Nutzerrechners (10) bezüglich eines Zugriffs auf zumindest eines der Endgeräte (30, 32, 34, 36) durch das Kommunikationsnetzwerk (1);
- ein zweites Mittel (16, 18), das dazu ausgebildet ist, basierend auf Parametern der Anfrage sowie von Verfügbarkeits- und/oder Ressourcenkriterien des Kommunikationsnetzwerks (1) eine dynamische Konfiguration der Kopplungselemente (20, 22, 24) durchzuführen, durch welche die für die Bildung der Kommunikationsverbindung erforderlichen Kopplungselemente (20, 22, 24) dem gleichen logischen Teilnetz zugeordnet werden.

15. Kommunikationsnetzwerk (1), das ein oder mehrere Endgeräte (30, 32, 34, 36) umfasst, auf die von dem Nutzerrechner (10) über eine Kommunikationsverbindung, welche über ein oder mehrere Kopplungselemente (20, 22, 24) führt, unter der Bedingung zugegriffen werden kann, dass der Nutzerrechner (10), die Kopplungselemente (20, 22, 24) der Kommunikationsverbindung und die Endgeräte (30, 32, 34, 36) derart konfiguriert sind, dass diese einem gleichen logischen Teilnetz des Kommunikationsnetzwerks (1) zugeordnet sind, wobei dieses eine Vorrichtung nach einem der vorhergehenden Ansprüche aufweist.
